# EUROPEAN PATENT SPECIFICATION

(11) **EP 2 176 121 B1**
(45) Date of publication and mention of the grant of the patent: **08.02.2012**
(21) Application number: 08775464.4
(22) Date of filing: 09.06.2008
(51) Int. Cl.: B63H 21/14, B63J 2/12, F23J 15/00, F02G 5/02, B01D 47/02

(54) **MACHINERY ARRANGEMENT OF A MARINE VESSEL**
MASCHINENANORDNUNG FÜR EIN SEEFAHRZEUG
SYSTÈME DE MACHINERIE D'UN VAISSEAU MARIN

(30) Priority: 13.08.2007 FI 20075569
(43) Date of publication of application: 21.04.2010
(73) Proprietor: Wärtsilä Finland Oy, 65380 Vaasa (FI)
(72) Inventor: HENRIKSSON, Torbjörn, FI-20780 Kaarina (FI)
(74) Representative: Finnilä, Kim Larseman
(86) International application number: PCT/FI2008/050339
(87) International publication number: WO 2009/022050

(56) References cited:
- CA-A1- 2 464 269
- DE-A1- 3 334 878
- FR-A- 2 353 715
- US-B1- 6 402 816

## Description

### Technical field

The invention relates to a machinery arrangement of a marine vessel, which machinery arrangement comprises an internal combustion engine, a heat recovery device for recovering waste heat from the exhaust gas of the internal combustion engine, a scrubber unit for scrubbing the exhaust gas, and a separate heating system according to the preamble of claim 1.

### Background art

Marine vessels powered by an internal combustion engine are generally equipped with a device for recovering energy in the form of waste heat from the exhaust gas of the internal combustion engine. Such devices are provided particularly for the main engines, but also for auxiliary engines. In the case of diesel-electric machinery, heat recovery devices are typically installed in connection with the engines driving the generators.

Closest prior art, DE 33 34 878 discloses a land based combustion arrangement, where flue gases from a boiler unit are passed through reduction units, whereby heat tapped from a first reduction unit is used for reheating flue gases after a second reduction unit. The reheated flue gases are led to a boiler for subsequent use in providing for heating air, district heating, etc.

The heat recovery device is usually in the form of an exhaust gas boiler through which a flow of water is circulated and heated by the exhaust gas in order to produce steam for consumers on the marine vessel. The boiler is usually dimensioned so that it has a sufficient capacity for all heating purposes on board, often with a certain margin, during normal service conditions. However, during periods of higher demand, e.g. cold winter days, or periods of low power of the engines, i.e. resulting in a reduced amount of recoverable heat, the exhaust gas boiler may not be sufficient to cover the prevailing demand.

If excess heat is produced (boiler dimensioned with a certain margin), this can be controlled by dumping the excess heat or arranging a by-pass of the exhaust gas, whereby the flow of heating media through the boiler does not have to be disturbed. In order to manage situations in which heat production is insufficient, the marine vessel is usually provided, as mentioned above, with an additional separate heating system, e.g. an oil-fired boiler.

As environmental awareness has increased, measures for treating exhaust gas from marine vessels have also been considered. One potential measure is to scrub the exhaust gas in order to achieve a reduction of sulphur oxides or other contaminants and to thereby reduce undesired emissions. The proposed scrubbing measures, however, have a number of disadvantages, i.e. white smoke, risk of down-wash and risk of water carry-over.

When the low temperature saturated exhaust gases leave the scrubber and are introduced to the atmospheric air, the exhaust gases typically having a high relative humidity, humidity condenses and forms a visible white plume (white smoke) in the vicinity of and outside the exhaust stack. In addition to high relative humidity, said exhaust gases are rather cold, thus lacking the normal buoyancy of hot exhaust gases. Consequently, there is a great risk that the plume or a part of it, i.e. the cold and humid exhaust gases, descends and grounds on the marine vessel in question, on other vessels, port facilities or other adjacent areas. Finally, although scrubbers are designed to avoid the carry-over of water droplets, the mechanisms used may be impaired by fouling or inadequate maintenance.

### Summary of the invention

An object of the present invention is to avoid the disadvantages of prior art and to provide a machinery arrangement that enables to treat excess heat generated on board a marine vessel in an energy economic manner. This object is attained by a machinery arrangement according to claim 1.

The basic idea of the invention is to provide a means with a dual function of reheating exhaust gases from the scrubber unit and of dumping excess heat when necessary. To this effect, the machinery arrangement further includes a reheating device in flow connection with the heat recovery device through the separate heating system for reheating the exhaust gas from the scrubber unit or for dumping excess heat when necessary.

Advantageously the reheating device is in flow connection with the heat recovery device through a steam drum of the separate heating system.

The machinery arrangement is advantageously provided with an additional heat recovery section, which is arranged at the exhaust gas inflow end of the scrubber unit. The extended heat recovery section is in flow connection with the heat recovery device, whereby the reheating device is in flow connection with the extended heat recovery section through said steam drum of the separate heating system.

In this manner reheating of the exhaust gases may be ensured even in cases where no excess heat is generated on board the marine vessel.

The additional heat recovery section may also be arranged in flow connection with the heat recovery device through the separate heating system. This provides for arranging a heated feed water flow to the separate heating system and further to the heat recovery device, whereby the waste heat recovery process may satisfy a higher demand of steam.

The reheating device may be integrated with the scrubber unit at the exhaust gas outflow end of the scrubber unit or arranged separately from the scrubber unit at the exhaust gas outflow end of the scrubber unit.

### Brief Description of Drawings

In the following the invention will be described, by way of example only, with reference to the accompanying schematic drawings, in which
Fig. 1 illustrates a first embodiment of a machinery arrangement according to the present invention,
Fig. 2 illustrates a second embodiment of a machinery arrangement according to the invention,
Fig. 3 illustrates a third embodiment of a machinery arrangement according to the invention, and
Fig. 4 illustrates a fourth embodiment of a machinery arrangement according to the invention.

### Detailed Description

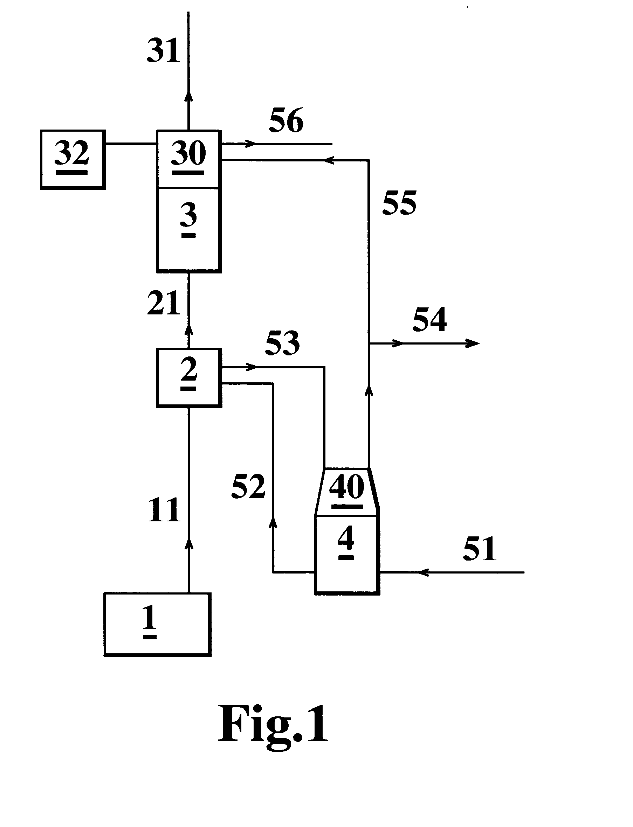

Fig. 1 illustrates a machinery arrangement of a marine vessel comprising an internal combustion engine 1, e.g. a diesel engine, a heat recovery device 2 (normally a so-called exhaust gas boiler) for recovering waste heat from the exhaust gas of the internal combustion engine 1, and a scrubber unit 3 for scrubbing the exhaust gases and thereby reducing emissions from the exhaust gases. The machinery arrangement further comprises a separate heating system 4 for producing heat for hotel consumers on board the marine vessel. Such a separate heating system conventionally comprises an oil-fired boiler.

In the following flow connections between the different components of the machinery arrangement will be indicated by flow lines.

In normal operation at sea the internal combustion engine 1 is driven to provide power for propulsion, generation of electricity, etc.. The exhaust gas, flow line 11, from the internal combustion engine 1 is led to the heat recovery device 2 and further to the scrubber unit 3 as indicated by flow line 21.

Primary feed water, flow line 51, is supplied to the heating system 4 and led further to the heat recovery device 2 as circulating water, as indicated by flow line 52, where it partially evaporates as a result of the heat generated by the exhaust gas and is returned as a mixture of water and steam, flow line 53, to a steam drum 40 of the heating system 4. Steam may then be delivered from the steam drum 40 for consumption on board as indicated by flow line 54.

In the present invention steam, excess heat with respect to the steam delivered to consumption (as will be discussed more in detail below), generated by the heat recovery device 2 and led through the steam drum 40 of the separate heating system 4 is further led to and circulated through a reheating device 30 arranged at the exhaust gas outflow end of the scrubber unit 3, as indicated by flow lines 55 and 56. This steam flow is used to reheat the exhaust gas flow in the scrubber unit 3 in order to raise the temperature of the scrubbed exhaust gas discharged to the atmosphere (flow line 31).

The reheating device 30 is advantageously provided with a temperature control system 32 for controlling the temperature of the exhaust gas discharged into the atmosphere.

The reheating of the cold and scrubbed exhaust gases avoids the formation of white smoke, raises the buoyancy of the exhaust gases discharged to the atmosphere so that they do not descend or ground, and also lessens undesired condensation in connection with the scrubber unit.

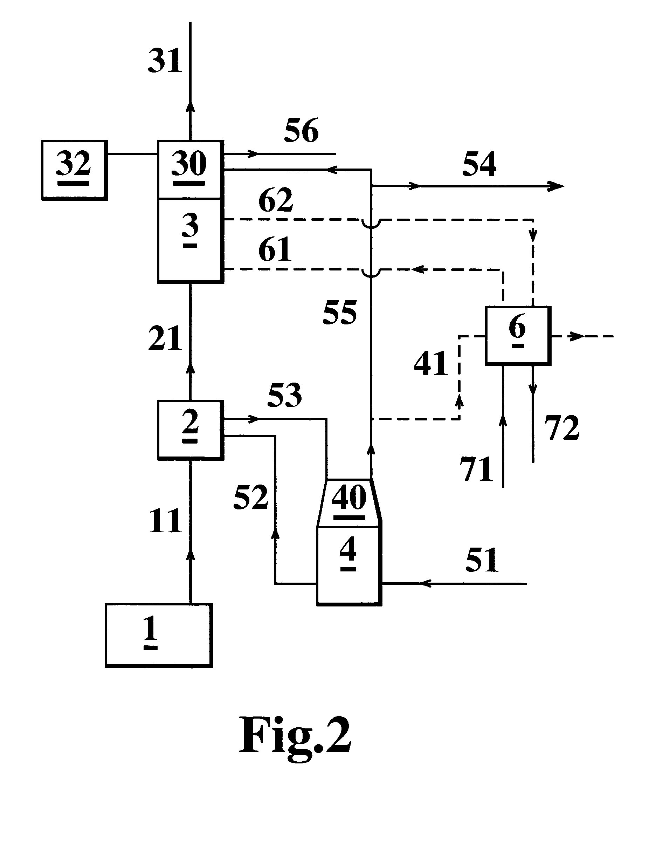

In normal operation the waste heat recovery device 2 has a sufficient capacity for all heating purposes on board (flow line 54), whereby it is not necessary to generate additional heat by means of the separate heating system 4. As the waste heat recovery device 2 normally is dimensioned with a certain margin, excess heat conventionally had to be dumped, normally by using a separate dumping device 6, a so-called dumping condenser (discussed more in detail in connection with Fig. 2).

According to the invention, excess heat recovered from the heat recovery device 2 may be led via the steam drum 40 of the heating system 4 to the reheating device 30 of the scrubber unit 3 as indicated by flow line 55. In this case the reheating device 30 consequently has a dual function and may act as a reheating device and as a dumping device in an energy economic manner.

In normal operation of the marine vessel, but during higher demand of heat for consumption, e.g. during cold winter days, the separate heating system 4 may additionally be used to generate sufficient heat for consumption on board (flow line 54) and for reheating the exhaust gas outflow from the scrubber unit 30 (flow lines 55 and 56).

Figure 2 shows a second embodiment of the present invention, more or less similar to the arrangement as discussed above in connection with Figure 1. The same reference numerals are used for the corresponding components. This embodiment, however, includes a dumping device 6 normally used on marine vessels for dumping excess heat as discussed above.

In conventional arrangements, the dumping device 6 would have been connected to the separate heating system 4 for dumping excess heat from the heat recovery device 2 via the steam drum 40 of the heating system 4 as indicated by dotted flow line 41.

In this case, however, according to the invention, the conventional dumping device available on board has been connected to the scrubber unit 3 for assisting in the scrubbing process. Scrubbing of exhaust gases is normally done by circulating a scrubbing medium, e.g. water, through the exhaust gas flow. The broken flow lines 61 and 62 indicate the circulation of the scrubbing medium from the dumping device 6, now actually performing as an auxiliary scrubbing arrangement, through the scrubber unit 3. Flow line 71 indicates cooling water, e.g. sea water or fresh water, inflow into the dumping device 6 and flow line 72 the cooling water outflow from the dumping device 6. This cooling flow cools down the scrubbing medium circulated through the scrubber unit 3. In other words, this represents an option for using a dumping device already installed on board a marine vessel in so-called retro-fit situations.

The connection to the scrubber unit thus gives a possibility to use a conventional dumping device in a purposeful, energy saving manner.

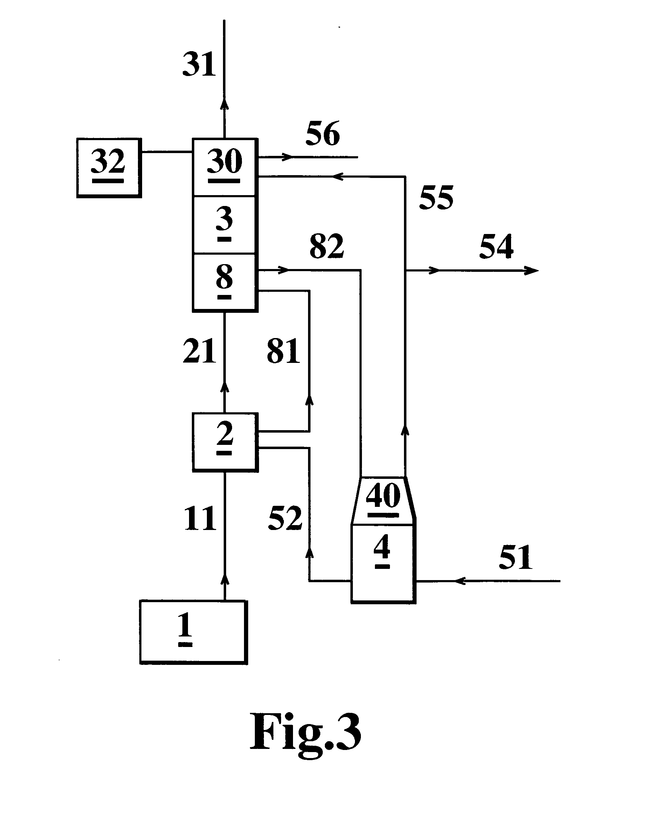

Figure 3 shows a third embodiment of the present invention, more or less similar to the arrangement as discussed above in connection with Figure 1. The same reference numerals are used for the corresponding components.

This embodiment includes an extended heat recovery section 8 arranged at the exhaust gas inflow end of the scrubber unit 3. The water and steam mixture generated in the heat recovery device 2 may subsequently be circulated, as indicated by flow line 81 and flow line 82, through the (still hot) exhaust gas flow in the additional heat recovery section 8 at the inflow end of the scrubber unit 3 in order to recover low grade heat, which then may be circulated through the steam drum 40 of the separate heating system 4 and further to the reheating device 30 of the scrubber unit 3.

This arrangement maximises the recovery of waste heat generated by the machinery arrangement of the marine vessel. It also ensures that there is heat available for the reheating device 30 of the scrubber unit 3, even when no excess heat is generated on board the marine vessel.

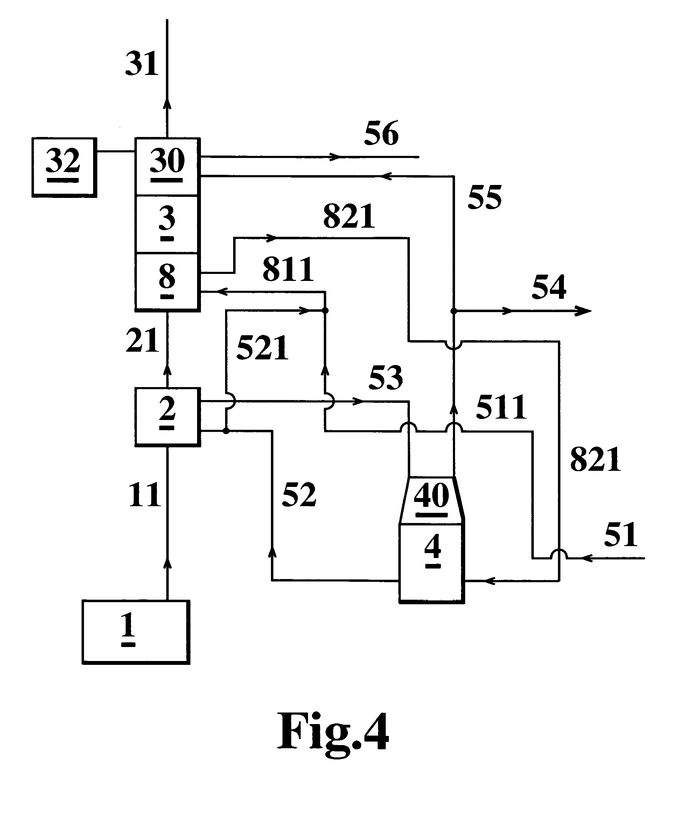

Figure 4 shows a fourth embodiment of the present invention, more or less similar to the arrangement as discussed above in connection with Figure 1. The same reference numerals are used for the corresponding components.

In this embodiment a feed water flow line 511 (an extension of the primary feed water flow line 51) is led past the separate heating system 4 and combined with flow line 521, which is a branch off line from the circulating water flow line 52 leading to the waste heat recovery device 2. Flow lines 511 and 521 are combined into flow line 811. The combined flow, flow line 811, consequently has a higher temperature than the primary feed water (flow line 51). This combined flow is led to and circulated through an extended waste heat recovery section 8 arranged at the exhaust gas inflow end of the scrubber unit 3.

As the heated combined flow circulates through the extended heat recovery section 8, it can capture energy from the low grade waste heat at the exhaust gas inflow end of the scrubber unit 3, and deliver a heated feed water flow, flow line 821, to the separate heating system 4. This heated feed water flow may then be re-circulated to the heat recovery device 2, flow line 52, and by way of the steam drum 40 of the separate heating system 4, flow line 53, to the reheating device 30, flow line 55, in a corresponding manner as in connection with Fig. 1.

This further raises the energy economics of the machinery arrangement.

In situations when the demand of steam is higher than what the waste heat recovery process normally delivers, this provides a supplementary way to satisfy this demand.

In the embodiments discussed above, the reheating device 30 may be integrated with the scrubber unit 3 at the exhaust gas outflow end of the scrubber unit or alternatively the reheating device may be arranged separately from the scrubber unit 3 at the exhaust gas outflow end of the scrubber unit. The flow lines discussed above constitute the different flow connections which comprise appropriate piping or tubing, valves and pumps which are not discussed in this connection in more detail.

Heating systems on board marine vessels are often based on steam as discussed above, whereby the dumping process typically is based on condensation. Other media, such as thermal oil and hot water are also used, whereby the dumping process may be based on cooling said media. The latter could also be employed in connection with the present invention.

Further, the number of internal combustion engines, heat recovery devices, and heating systems can be varied and combined in an appropriate manner depending on the prevailing circumstances. The heat recovery device and the heating system may also be integrated into one unit.

The four embodiments described above are just examples and clearly show that many variations with varying components are possible in carrying out the present invention.

The description and drawings are only intended to clarify the basic idea of the invention. The invention may vary within the scope of the ensuing claims.

## Claims

1. Machinery arrangement of a marine vessel, which machinery arrangement comprises an internal combustion engine (1), a heat recovery device (2) for recovering waste heat from the exhaust gas of the internal combustion engine (1), a scrubber unit (3) for scrubbing the exhaust gas, and a separate heating system (4), **characterised in that** the machinery arrangement further includes a reheating device (30) in flow connection with the heat recovery device (2) through the separate heating system (4) and **in that** the reheating device (30) is arranged to reheat the exhaust gas flow from the scrubber unit (3) or to dump excess heat.

2. Machinery arrangement according to claim 1, **characterised in that** the reheating device (30) is in flow connection with the heat recovery device (2) through a steam drum (40) of the separte heating system (4).

3. Machinery arrangement according to claim 2, **characterised in that** an extended heat recovery section (8) is arranged at the exhaust gas inflow end of the scrubber unit (3), and **in that** the extended heat recovery section (8) is in flow connection with the heat recovery device (2).

4. Machinery arrangement according to claim 3, **characterised in that** the reheating device (30) is in flow connection with the extended heat recovery section (8) through the steam drum (40) of the separate heating system (4).

5. Machinery arrangement according to claim 2, **characterised in that** an extended heat recovery section (8) is arranged at the exhaust gas inflow end of the scrubber unit (3), and **in that** the extended heat recovery section (8) is in flow connection with the heat recovery device (2) through the separate heating system (4).

6. Machinery arrangement according to claim 1, **characterised in that** the reheating device (30) is integrated with the scrubber unit (3) and arranged at the exhaust gas outflow end of the scrubber unit.

7. Machinery arrangement according to claim 1, **characterised in that** the reheating device (30) is arranged separately from the scrubber unit (3) and arranged at the exhaust gas outflow end of the scrubber unit.

## Patentansprüche

1. Maschinenanordnung für ein Seefahrzeug, welche Maschinenanordnung einen Verbrennungsmotor (1), eine Wärmerückgewinnungsvorrichtung (2) zur Rückgewinnung von Abwärme von dem Abgas des Verbrennungsmotors (1), eine Wäschereinheit (3) zum Waschen des Abgases und ein gesondertes Erhitzungssystem (4) umfasst, **dadurch gekennzeichnet, dass** die Maschinenanordnung ferner eine Wiedererhitzungsvorrichtung (30) in einer Fließverbindung durch das gesonderte Erhitzungssystem (4) mit der Wärmerückgewinnungsvorrichtung (2) umfasst, und dass die Wiedererhitzungsvorrichtung (30) dazu eingerichtet ist, den Abgasstrom von der Wäschereinheit (3) wiederzuerhitzen oder überschüssige Wärme abzuführen.

2. Maschinenanordnung nach Anspruch 1, **dadurch gekennzeichnet, dass** die Wiedererhitzungsvorrichtung (30) in einer Fließverbindung durch eine Dampftrommel (40) des gesonderten Erhitzungssystems (4) mit der Wärmerückgewinnungsvorrichtung (2) steht.

3. Maschinenanordnung nach Anspruch 2, **dadurch gekennzeichnet, dass** an dem Abgaszuflussende der Wäschereinheit (3) ein verlängerter Wärmewiedergewinnungsabschnitt (8) angeordnet ist, und dass der verlängerte Wärmewiedergewinnungsabschnitt (8) in einer Fließverbindung mit der Wärmewiedergewinnungsvorrichtung (2) steht.

4. Maschinenanordnung nach Anspruch 3, **dadurch gekennzeichnet, dass** die Wiedererhitzungsvorrichtung (30) in einer Fließverbindung durch die Dampftrommel (40) des gesonderten Erhitzungssystems (4) mit dem verlängerten Wärmewiedergewinnungsabschnitt (8) steht.

5. Maschinenanordnung nach Anspruch 2, **dadurch gekennzeichnet, dass** an dem Abgaszuflussende der Wäschereinheit (3) ein verlängerter Wärmewiedergewinnungsabschnitt (8) angeordnet ist, und dass der verlängerte Wärmewiedergewinnungsabschnitt (8) in einer Fließverbindung durch das gesonderte Erhitzungssystem (4) mit der Wärmewiedergewinnungsvorrichtung (2) steht.

6. Maschinenanordnung nach Anspruch 1, **dadurch gekennzeichnet, dass** die Wiedererhitzungsvorrichtung (30) mit der Wäschereinheit (3) vereinigt ausgeführt ist und an dem Abgasabflussende der Wäschereinheit angeordnet ist.

7. Maschinenanordnung nach Anspruch 1, **dadurch gekennzeichnet, dass** die Wiedererhitzungsvorrichtung (30) von der Wäschereinheit (3) gesondert eingerichtet ist und an dem Abgasabflussende der Wäschereinheit angeordnet ist.

## Revendications

1. Système de machinerie d'un vaisseau marin, lequel système de machinerie comprend un moteur à combustion interne (1), un dispositif de récupération de chaleur (2) pour récupérer la chaleur perdue du gaz d'échappement du moteur à combustion interne (1), une unité de laveur (3) pour laver le gaz d'échappement, et un système de chauffage séparé (4), **caractérisé en ce que** le système de machinerie comprend en outre un dispositif de postcombustion (30) en connexion de flux avec le dispositif de récupération de chaleur (2) via le système de chauffage séparé (4), et **en ce que** le dispositif de re-chauffage (30) est agencé pour rechauffer le flux de gaz d'échappement de l'unité de laveur (3) ou pour vider la chaleur excessive.

2. Système de machinerie selon la revendication 1, **caractérisé en ce que** le dispositif de postcombustion (30) est en connexion de flux avec le dispositif de récupération de chaleur (2) via un ballon de vapeur (40) du système de chauffage séparé (4).

3. Système de machinerie selon la revendication 2, **caractérisé en ce qu'**une section de récupération de chaleur étendue (8) est agencée sur l'extrémité de l'extrémité d'entrée du flux de gaz d'échappement de l'unité de laveur (3), et **en ce que** la section de récupération de chaleur étendue (8) est en connexion de flux avec le dispositif de récupération de chaleur (2).

4. Système de machinerie selon la revendication 3, **caractérisé en ce que** le dispositif de postcombustion (30) est en connexion de flux avec la section de récupération de chaleur étendue (8) via le ballon de vapeur (40) du système de chauffage séparé (4).

5. Système de machinerie selon la revendication 2, **caractérisé en ce qu'**une section de récupération de chaleur étendue (8) est agencée sur l'extrémité d'entrée du flux de gaz d'échappement de l'unité de laveur (3), et **en ce que** la section de récupération de chaleur étendue (8) est en connexion de flux avec le dispositif de récupération de chaleur (2) via le système de chauffage séparé (4).

6. Système de machinerie selon la revendication 1, **caractérisé en ce que** le dispositif de postcombustion (30) est intégré avec l'unité de laveur (3) et agencé sur l'extrémité de sortie du flux de gaz d'échappement de l'unité de laveur.

7. Système de machinerie selon la revendication 1, **caractérisé en ce que** le dispositif de postcombustion (30) est agencé séparément de l'unité de laveur (3) et agencé sur l'extrémité de sortie du flux de gaz d'échappement de l'unité de laveur.
